(19) Europäisches Patentamt / European Patent Office / Office européen des brevets

(11) **EP 1 791 064 A1**

(12) **EUROPEAN PATENT APPLICATION**

(43) Date of publication:
**30.05.2007 Bulletin 2007/22**

(51) Int Cl.:
***G06F 17/18*** *(2006.01)*

(21) Application number: **05111457.7**

(22) Date of filing: **29.11.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Hitachi Ltd.**
**Tokyo (JP)**

(72) Inventor: **Sievers, Fabian**
**Dublin 4 (IE)**

(74) Representative: **Piotrowicz, Pawel Jan Andrzej et al**
**Venner Shipley LLP**
**Byron House**
**Cambridge Business Park**
**Cowley Road**
**Cambridge CB4 0WZ (GB)**

(54) **Computer system for simulating a physical system**

(57) A computer system for simulating a physical system comprising a first module configured to convert a probability distribution function of a physical property into a discrete function having at least one segment and a second module configured to receive each segment and to perform an exact transformation of each segment.

Fig. 2

**Description**

The present invention relates to a computer system for simulating a physical system.

In a clinical trial, an experimenter administers a fixed dose of a drug to several patients and monitors the concentration of the drug in the blood stream as a function of time. The clinical trial can be simulated as a model using a computer system to determine whether the concentration of the drug exceeds a therapeutic level, but falls below a harmful level.

The model may depend on several factors such as the rate at which the drug passes from the stomach to the blood stream and the rate at which it is excreted. These rates vary from person to person. Moreover, concentration depends on the volume of distribution, which in turn depends upon body weight. The model uses probability distribution functions of rates and weights. However, due to the possible high number of distributions and their complexity, plentiful computational resources are needed to model the trial. Otherwise it can take a long time to simulate the trial. In fact, this problem is common in simulating physical systems.

The present invention seeks to provide an improved computer system in which a physical system can be simulated more quickly and/or with less processing power, while maintaining accuracy.

According to a first aspect of the present invention there is provided a computer system for simulating a physical system comprising a first module configured to convert a probability distribution function of a physical property into a discrete function having at least one segment and a second module configured to perform an exact transformation of each segment.

The second module may be configured to add results of each transformation to provide a new probability distribution function. The second module may be configured to perform a unary transformation of each segment. The second module may be configured to perform a binary transformation of each segment with each segment of another discrete probability distribution function, such as convolution of each segment with each segment of another discrete probability distribution function and/or addition, subtraction, multiplication or division integral transformation of each segment with each segment of the other discrete function.

The probability distribution function may be of an amount of a drug or a time interval in a processing system.

According to a second aspect of the present invention there is provided a method of simulating a physical system, the method comprising converting a probability distribution function of a physical property into a discrete function having at least one segment and performing an exact transformation of each segment.

According to a third aspect of the present invention there is provided a computer program comprising instructions for performing the method.

According to a fourth aspect of the present invention there is provided a computer program product comprising a computer-readable medium storing a computer program for causing a computer to convert a probability distribution function of a physical property into a discrete function having at least one segment and to perform an exact transformation of each segment.

Embodiments of the present invention will now be described, by way of example, with reference to the accompanying drawings in which:

Figure 1 are illustrative plots of concentration of a drug in the blood stream as a function of time;
Figure 2 is a schematic block diagram of a computer system for simulating a physical system in accordance with the present invention;
Figure 3 is a process flow diagram of a simulating process performed by the computer system shown in Figure 2;
Figures 4a to 4d illustrate, for a simple example, results of performing steps in the simulating process shown in Figure 3;
Figures 5a and 5b illustrate, for another example, results of the simulating process shown in Figure 3;
Figure 6 illustrates a unary transformation;
Figure 7 illustrates a binary transformation;
Figure 8 is a plot of number of requests in a processing system which can be modelled in accordance with the present invention; and
Figure 9 is a plot of waiting time of the requests shown in Figure 8.

Drug companies usually formulate a drug such that when it is administered to a patient its concentration, for example in the blood stream, exceeds a level at which it provides a therapeutic effect, but falls short of a harmful level. However, the effect of the drug will vary from person to person, for example due to differences in their body weights. Thus, drug companies usually formulate the drug to have a dose such that the concentration falls within these levels when taken by most of the population. The size of dose is usually found as part of a clinical trial.

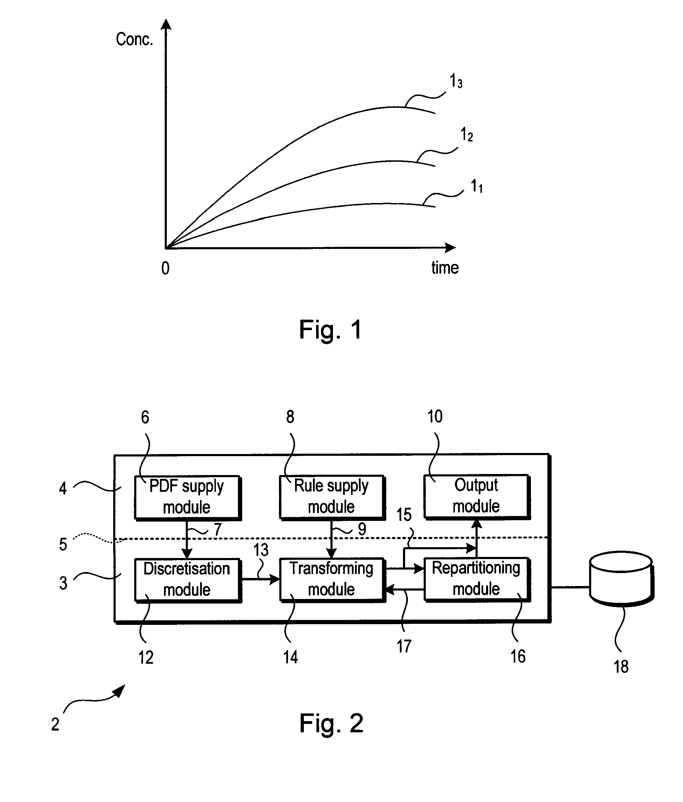

For example, referring to Figure 1, if a fixed dose of a drug is administered to three different patients, then the concentration of the drug in their respective blood streams could vary with time as shown in plots $1_1, 1_2, 1_3$. For example,

this may be due to differences in body weights and/or other factors.

Before conducting any trial, an experimenter may wish to ascertain ranges of doses which are safe to use. Furthermore, during the trial, the experimenter may wish to check that the results of the trial are as expected. For this reason, the experimenter simulates the concentration of the drug in the blood stream based on an understanding of how the body processes the drug.

Referring to Figure 2, a computer system 2 for simulating a physical system, such as concentration of a drug in the blood stream, is shown. The computer system 2 may be distributed and, thus, may include a client 3 and server 4 connected via a network 5. The client 3 may be a relatively low-specification personal computer, whereas the server 4 can be a high performance computer. Alternatively, the computer system 2 may be implemented in a single computer.

The computer system 2 includes a module 6 for supplying at least one input probability distribution function 7, a module 8 for supplying at least one rule 9 for processing the at least one input probability distribution function 7 and a module 10 for outputting and post-processing at least one output probability distribution function 11. These modules 6, 8, 10 may be implemented on the client 3.

Each probability distribution function 7 defines a variable or a parameter of a physical system, such as body weight.

The probability distribution function(s) 7 and rules 9 may be prepared manually by the user and/or selected from a pre-stored database.

The computer system 2 further includes a first module 12 for converting the at least one input probability distribution function 7, if not already discrete, into corresponding discrete probability distribution function(s) 13, a module 14 for performing an exact probabilistic transformation of the discrete probability distribution function(s) 14 so as to provide at least one transformed probability distribution function 15 (herein also referred to as the "result") and a second module for converting the result 15 into at least one discrete result 17.

The first discretising module 12 can take a probability distribution function 7, such as f(x), and divide at least part of the function 7 over an interval $(X_1 \rightarrow X_2)$ into several segments over a plurality of intervals $(x_1 \rightarrow x_{1,1}, x_{1,1} \rightarrow x_{1,2}, ...,$ and $x_{1,n} \rightarrow x_2)$. The discretising module 13 approximates the probability distribution function 7 in each or, if there is only one, the segment and may ensure that the sum of the areas of the segments equals one. However, the discretising module 12 can simply approximate the probability distribution function 7 over the interval, such that there is a single segment.

The discretising module 12 divides the probability distribution function 7 according to the rate of change of the probability distribution function 7 so as to provide higher resolution when the probability distribution function 7 changes rapidly and lower resolution when the probability distribution function 7 changes slowly. However, the discretising module 12 can divide the probability distribution function 7 into equidistant intervals or equiprobable intervals. The number of segments can be chosen to provide a given degree of accuracy. Typically, the number of segments is of the order 1 to 10,000. However, the number of segments can be higher.

The discretising module 12 approximates the probability distribution function 7 in each interval as a uniform probability distribution. Thus, the discrete, approximate probability distribution function 13 resembles a histogram or bar chart. However, other probability distributions, such as non-uniform linear or quadratic probability distribution functions, may be used provided they can be exactly (e.g. analytically) transformed.

The transformation module 14 may perform unary transformations, such as square root or cosine, of a function or binary transformations, such addition, subtraction, multiplication or division integral transforms, of the probability distribution function(s) 7. Other transformations are possible. Furthermore, one or more unary and one or more binary transformations may be combined, for example sequentially.

The transformation module 14 is able to perform (or perform more easily) an exact, for example analytical, probabilistic transformation because the discretising module 12 has converted each probability distribution function 7 into discrete, uniformly valued segments.

The second discretising module 16 (hereinafter referred to as the "repartitioning module 16") takes what may be a continuous result 15 and converts it into a discrete result 17 which can be fed back into transformation module 14 and/or output.

The computer system 2 may be provided with an optional database 18 for storing probability distribution functions 7, 13, rules 9 and results 15, 17.

The computer system 2 includes at least one processor (not shown), memory (not shown) storing software for providing the modules 6, 8, 10, 12, 14, 16, device drivers (not shown), input devices (not shown), such as a keyboard and/or mouse, output devices (not shown), such as a display, and storage devices (not shown), such as hard disk.

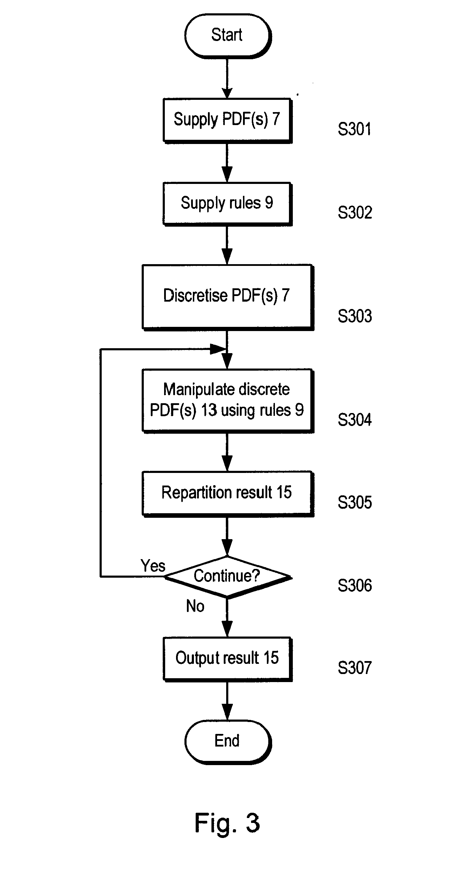

Referring to Figure 3, a process flow diagram of a process of a method of simulating a physical system in accordance with the present invention is shown.

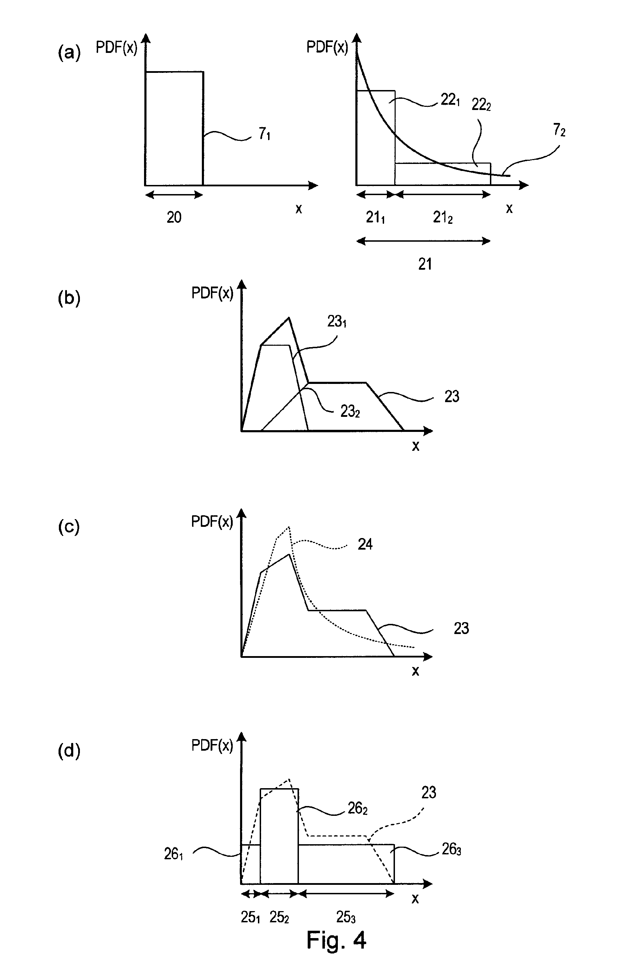

Referring also to Figure 4a, the process will be described using simple probability distribution functions $7_1, 7_2$.

The probability distribution functions 7 and rules 9 are specified by a user and supplied by the probability distribution function-supplying module 6 (Figure 2) and rule-supplying module 8 (Figure 2) to the discretising module 12 (Figure 2) and transformation modules 14 (Figure 2) respectively (steps S301 & S302).

A first probability distribution function $7_1$ is a uniform function over a first interval 20. A second probability distribution function $7_2$ is an exponential function.

The discretising module 12 (Figure 2) divides an interval 21 of the second probability distribution function $7_2$ into first and second intervals $21_1$, $21_2$ and approximates the probability distribution function $7_2$ in each interval $21_1$, $21_2$ to provide a discrete function having first and second segments $22_1$, $22_2$ (step S303).

In this example, the rule 9 is to convolve the first and second probability distribution functions $7_1$, $7_2$, that is:

$$h(x) = f(x) \oplus g(x) \qquad (1)$$

Referring to Figure 4b, the transformation module 14 (Figure 2) applies the rule 9 to produce a result 15 (Figure 2), which in this example involves transformation module 14 (Figure 2) convolving probability distribution function $7_1$ with the segments $22_1$, $22_2$ producing partial solutions $23_1$, $23_2$ which, when added, produce a cumulative result 23 (step S304).

Referring to Figure 4c, a comparison of the cumulative result 23 and a full, conventional analytical result 24 is shown. It will be appreciated that this comparison is for the purposes of illustration only and that the computer system 2 does not usually carry out a full, conventional analytical solution not least because the solution is impossible or onerous to compute.

The repartition module 16 (Figure 2) may convert the result 15 (Figure 2), in this case cumulative result 23, into a discretised result 17 (Figure 2) (step S305).

Referring to Figure 4d, the repartition module 16 (Figure 2) may divide the cumulative result 23 into intervals $25_1$, $25_2$, $25_3$ and approximate the cumulative result 23 in these intervals $25_1$, $25_2$, $25_3$ as approximations $26_1$, $26_2$, $26_3$.

The process may continue to process the result 15 (step S306 & S303). For example, the transformation module 14 (Figure 2) may perform further transformations on approximations $26_1$, $26_2$, $26_3$.

The results may be output to the output module 10 (Figure 2) for displaying and post-processing by the user (step S306). Post-processing may include determining quantiles, determining mean and variance and/or determining area under the curve.

As mentioned earlier, the computer system 2 (Figure 2) can simulate the concentration of the drug in the blood stream.

The concentration, $C$, is the amount of drug in the blood stream, $B$, divided by the so-called "volume of distribution", $V$, i.e.

$$C = \frac{B}{V} \qquad (2)$$

For a single individual, the volume is given:

$$V_i = k_i . W_i \qquad (3)$$

where $W_i$ is the body weight of the individual and $k_i$ is a person-specific constant. Thus, the concentration for the individual $i$ is:

$$C_i = \frac{B}{k_i . W_i} \qquad (4)$$

For an individual, $B$, $k_i$, $W_i$ are single numbers and so it is easy to decide whether $C_i$ falls between a therapeutic level *T* and a harmful level *H*.

For a population, however, it is harder to decide whether the concentration $C_i$ falls with these limits. Within a population, body weight has a probability density *PDF(W)* and constant also has a probability density *PDF(k)*. Thus, for a given dose, not all individuals will have the same concentration $C_i$. Even if the mean concentration $\langle C_i \rangle$ lies within limits, the concentration for some individuals may fall below the therapeutic level *T* or exceed the harmful level *H*. By calculating *PDF(C)*, the experimenter can assess the efficacy of the clinical trial.

To simulate the concentration of the drug in the blood stream, the probability distribution function module 6 (Figure 2) supplies the following probability distribution functions 7 (Figure 2) to the discretising module 12 (Figure 2):

$$V_e = \text{normal } (0, 0.18) \qquad\qquad (5a)$$

$$w = \text{normal } (70, 20) \qquad\qquad (5b)$$

$$d = \text{normal } (100, 0.1) \qquad\qquad (5c)$$

$$b = \text{uniform } (0, 0.1) \qquad\qquad (5d)$$

$$e = \text{uniform } (0, 0.1) \qquad\qquad (5e)$$

$$k_1 = \text{normal } (1, 0.1) \qquad\qquad (5f)$$

$$k_2 = \text{normal } (1, 0.1) \qquad\qquad (5g)$$

where $V_e$ is the random variation in the volume of distribution, *w* is body weight, *d* is the amount of drug in the stomach, *b* is the amount of drug in the blood stream, *e* is the amount of drug in the kidneys (i.e. excreted), $k_1$ is the decay constant for the drug passing from the stomach to the blood stream and $k_2$ is the decay constant for the drug passing from the blood stream to the kidneys.

In equations 5a to 5f above, two distributions are used, namely normal($\mu$ ,$\sigma^2$) which is the normal distribution $P(x)$ in a variate *x* having mean $\mu$ and standard deviation $\sigma^2$ and defined by:

$$P(x) = \frac{1}{\sigma \sqrt{2\pi}} e^{-(x-\mu)^2/2\sigma^2} \qquad\qquad (6)$$

and uniform (*a,b*) which is the uniform distribution function defined by:

$$P(x) = \begin{cases} 0 & \text{for } x < a \\ 1/(b-a) & \text{for } a \leq x \leq b \\ 0 & \text{for } x > b \end{cases} \qquad (7)$$

The discretising module 12 (Figure 2) converts the normal probability distribution functions 7 into discrete functions having, for example, three segments (not shown).

The rule-supplying module 8 (Figure 2) supplies a function, namely:

$$V = 0.21 W e^{V_e} \qquad (8)$$

where 0.21 is phenomenological constant.

The rule-supplying module 8 (Figure 2) also supplies differential equations, namely:

$$\frac{dd}{dt} = k_1 d \qquad (9a)$$

$$\frac{db}{dt} = k_1 d - k_2 b \qquad (9b)$$

$$\frac{de}{dt} = k_2 b \qquad (9c)$$

The transformation module 14 (Figure 2) applies the rules found in equations 8 and 9a to 9c, to the discretised probability distribution functions based on equations 5a to 5e.

Different output may be selected. For example, PDF($d$), PDF($b$) or PDF($e$) can be selected at different times $t$, for example $t$ = 0.2, 0.4, 0.6, 0.8, 1.0 and 1.2.

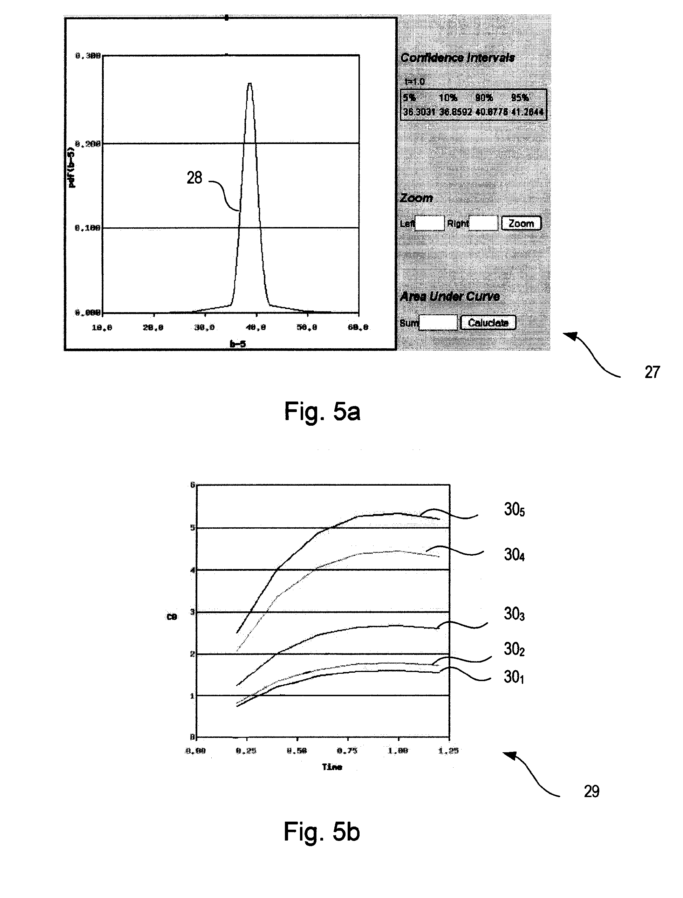

Referring to Figure 5a, a screen shot 27 of an output provided through the output module 10 (Figure 2) is shown. The screen shot 27 shows a plot 28 of PDF($b$) at $t$ = 1.0.

Referring to Figure 5b, a screen shot 28 of another output provided through the output module 10 (Figure 2) is shown. The screen shot 29 shows plots $30_1$, $30_2$, $30_3$, $30_4$, $30_5$ of $C = b/V$ with time $t$. The plots $30_1$, $30_2$, $30_3$, $30_4$, $30_5$ include not only a plot $30_3$ of medium concentration, but also quantile plots.

As explained earlier, the transformation module 14 (Figure 2) is able to perform an exact probabilistic transformation because the discretising module 12 (Figure 2) has converted each probability distribution function 7 into discrete, uniformly valued segments.

Some examples of exact unary and binary transformations of discrete probability distribution functions will now be described in more detail.

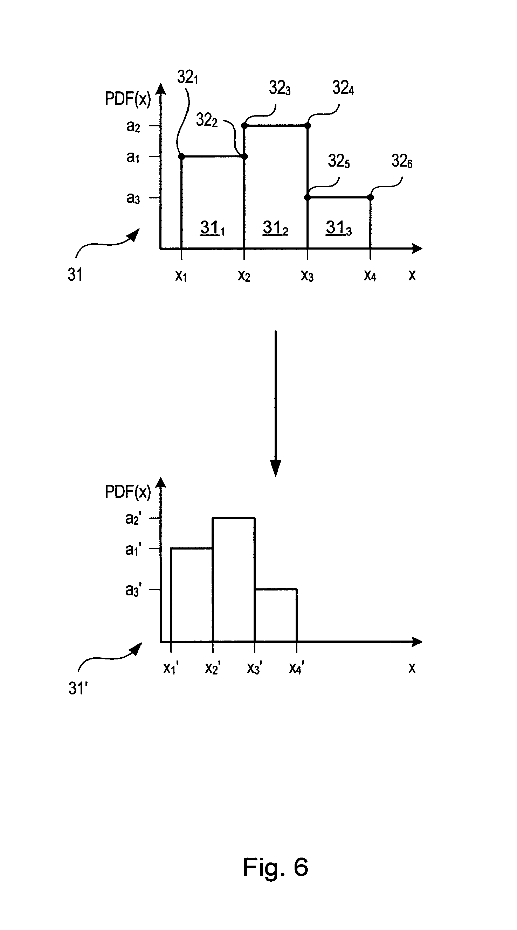

Referring to Figure 6, an example of a discrete probability distribution function 31 is shown. The discrete probability distribution function 31 may correspond to a discrete probability distribution function 13 (Figure 2) produced by the discretisation module 12 (Figure 2).

The probability distribution function 31 has three segments $31_1$, $31_2$, $31_3$ each having respective variate starting and finishing values of $(x_1, x_2)$, $(x_2, x_3)$ and $(x_3, x_4)$ and probability distribution values $a_1$, $a_2$ and $a_3$.

A unary transformation of the discrete probability distribution function 31 is carried out by transforming each

segment separately $31_1$, $31_2$, $31_3$. A square root transformation will be used to illustrate a unary transformation:

The transformation module 14 (Figure 2) takes the square root of the starting variate value $32_1$ ($x_1$) of the first

segment $31_1$ to produce a new starting variate value $x_1' = \sqrt{x_1}$ and the square root of the finishing variate value $32_2$

($x2$) of the first segment $31_1$ to produce a new finishing variate value $x_2' = \sqrt{x_2}$ . Between the new starting and finishing variate values $x_1'$ , $x_2'$ the new segment $31_1$' is given a renormalized probability distribution value $a_1$'. The same

process is applied to the second segment $31_2$ and so on.

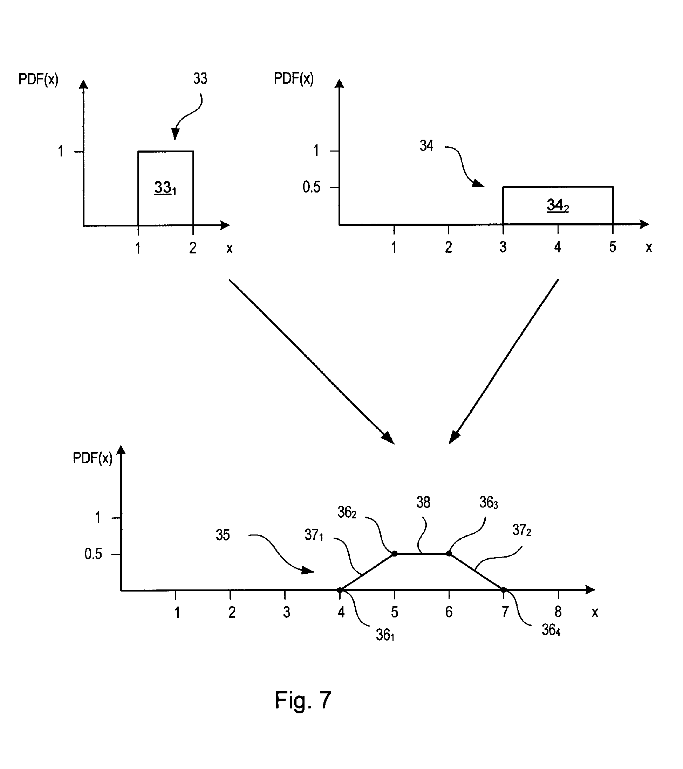

Referring to Figure 7, further examples of discrete probability distribution functions 33, 34 are shown. The discrete probability distribution functions 33, 34 may correspond to a discrete probability distribution functions 13 (Figure 2) produced by the discretisation module 12 (Figure 2).

A first probability distribution function 33 has one segment $33_1$ having variate starting and finishing values of ($x_A$, $x_B$), in this case (1, 2), and probability distribution value $c$, in this case 1. A second probability distribution function 34 has one segment $34_1$ having variate starting and finishing values of ($x_C$, $x_D$), in this case (3, 5), and probability distribution value $j$, in this case 0.5.

A binary transformation of the discrete probability distribution functions 33, 34 is carried out to produce a transformation probability distribution function 35. An addition integral transformation of the discrete probability distribution functions 33, 34 will be used to illustrate a binary transformation.

The transformation module 14 (Figure 2) determines a starting variate value $36_1$ of the transformed probability distribution function 35 by adding the start variate values of the functions 33, 34, i.e. $x_A + x_C$. The transformed probability distribution function 35 rises up a first slope $37_1$ to a first shoulder variate value $36_2$. The transformation module 14 (Figure 2) may determine the first shoulder variate value $36_2$ using, for example:

$$x_A + x_C + \min\left(x_B - x_A, x_D - x_C\right)$$

The transformed probability distribution function 35 may have a plateau 38, although it need not necessarily do so. The transformation module 14 (Figure 2) may determine a second shoulder variate value $36_3$ using, for example:

$$x_B + x_D - \min\left(x_B - x_A, x_D - x_C\right)$$

The transformed probability distribution function 35 drops down a second slope $37_2$ to a finishing variate value $36_4$. The transformation module 14 (Figure 2) determines the finishing variate value $36_4$ by adding the finishing variate values of the functions 33, 34, i.e. $x_B + x_D$.

If the first and second discrete probability distribution functions 33, 34 have more than two segments, then this process is repeated for each pair of segments. For example, this involves convolving a first segment from the first probability distribution function 33 with a first segment from the second probability distribution function 34, the first segment from the first probability distribution function 33 with a second segment from the second probability distribution function 34 and so on until the first segment from the first probability distribution function 33 with a last segment from the second probability distribution function 34 then a second segment from the first probability distribution function 33, with the first segment from the second probability distribution function 34 and so on.

For an addition integral transformation, the slopes $37_1$, $37_2$ are linear. For other forms of integral transformation, the slopes $37_1$, $37_2$ may have other shapes, such as logarithmic. The plateau 38 need not have a constant value, but may have, for example in the case of multiplication integral transformation, a logarithmic shape.

The system and process hereinbefore described may be used to simulate any system which is driven by randomness, such as queuing or manufacturing processes.

For example, the system may be a computer system (hereinafter referred to as a "processing system"), in which requests are processed using a First-In-First-Out (FIFO) arrangement.

A request $j$ arrives at a system time $t_j$. If the system is busy, then the request waits for a time $w_j$. The system services the request in time $b_j$, after which a result leaves the system at time $r_j$. The time span between arrivals $j$-1 and $j$ may be denoted $a_j$ and the time span between departures $j$-1 and $j$ may be denoted $d_j$. The time span for which the system is idle before the arrival of request $j$ may be denoted $i_j$.

Individual events and distributions of event are listed in Table 1 below:

Table 1

| Individual events | | Distribution of events | |
|---|---|---|---|
| $t_j$ | arrival time | - | - |
| $w_j$ | waiting time | W | distribution of waiting times |
| $b_j$ | service time | B | distribution of service times |
| $r_j$ | departure time | - | - |
| $\alpha_j$ | inter-arrival time | A | distribution of inter-arrival times |
| $d_j$ | inter-departure time | D | distribution of inter-departure times |
| $i_j$ | idle time | I | distribution of idle times |

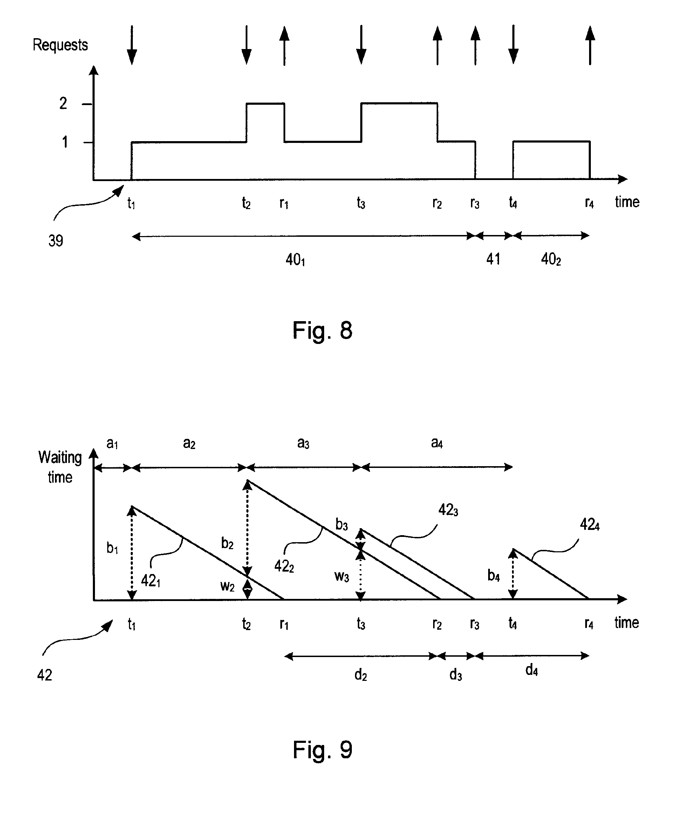

Referring to Figure 8, a plot 39 of the number of requests waiting to be processed by a processing system is shown. The plot shows periods $40_1$, $40_2$ when the system is busy and a period 41 when the system is idle.

Referring to Figure 9, a plot 42 of waiting time is shown. The plot 42 includes lines $42_1$, $42_2$, $42_3$, $42_4$ representing a time a request will wait in the system before departure. A new arrival is represented by a jump of magnitude $b_j$.

If the system has been idle (as for $j = 1$ and $j = 4$), then the remaining service time for the request immediately starts to decrease. However, if the system has been busy (as for $j = 2$ and $j = 3$), then a newly-arrived request is subject to a waiting time which equals the sum of the service times of previous requests.

Thus, the following relations hold:

$$r_{j-1} = t_{j-1} + w_{j-1} + b_{j-1} \tag{10}$$

$$r_j = t_j + w_j + b_j \tag{11}$$

and therefore

$$d_j = r_j - r_{j-1} = \underbrace{\left(t_j - t_{j-1}\right)}_{a_i} + \left(w_j - w_{j-1}\right) + \left(b_j - b_{j-1}\right) \tag{12}$$

$$w_j = \max\left(0, w_{j-1} + b_{j-1} - a_j\right) \tag{13}$$

and a so-called "breathing space" can be defined as:

$$c_{j-1} = b_{j-1} - a_j \tag{14}$$

such that equation 13 can be re-written as

$$w_j = \max\left(0, w_{j-1} + c_{j-1}\right) \tag{13'}$$

and

$$d_j = b_j - \min\left(0, w_{j-1} + c_{j-1}\right) \tag{15}$$

$$i_j = -\min\left(0, w_{j-1} + b_{j-1} - a_j\right) \tag{16}$$

For a given sequence of inter-arrival times and service times, a sequence of waiting, inter-departure times and idle times can be determined.

Equations 13', 15 and 16 can be translated into operations for probability distribution functions, namely:

$$C(t) = B(t) \oplus A(-t) \tag{17}$$

$$W(t) = \pi\left(W(t) \oplus C(t)\right) \tag{18}$$

$$D(t) = B(t) \oplus I(t) \tag{19}$$

$$I(t) = \bar{\pi}\left(W(t) \oplus C(t)\right) \tag{20}$$

where $\pi$ and $\bar{\pi}$ are sweeping operations for maximum and minimum respectively and where equation 19 can be presented as:

$$D(t) = \int_{-\infty}^{+\infty} B(t) I(t - \tau)\, d\tau \tag{19'}$$

Equations 18 and 20 can be presented in a similar format.

The $\pi$ operation involves integrating the probability distribution function $W(t) \oplus C(t)$ for negative variate values (for example, over the range $-\infty \to 0$) so as to find a weighting $\alpha$ and replacing this part of the probability distribution function with a delta function at zero variate value, the delta function having pre-weighting $\alpha$.

The $\bar{\pi}$ operation involves integrating the probability distribution function $W(t) \oplus C(t)$ for positive variate values so as to find a weighting $\beta$ and replacing this part of the probability distribution function with a delta function at zero variate value, the delta function having pre-weighting $\beta$. The negative part of the probability distribution function is flipped by reflecting the function about the y-axis.

The waiting time probability distribution function $W$ is determined self consistently. This may involve guessing an initial waiting time probability distribution function $W$, such as there is no waiting, and iteratively calculating equation 18 until the result converges. For example, this may involve determining whether two results are the same, i.e. $W_i = W_{i-1}$, or any difference is small, for example based on chisquared test. Once the waiting time probability distribution function $W$ has been determined, the inter-departure times and idle times probability distribution functions $D$, $I$ can be determined.

Thus, for a given inter-arrival time probability distribution function $A$ and a service time probability distribution function $B$, probability distribution functions $W$, $D$, $I$ for waiting, inter-departure times and idle times can be determined.

The computer system 2 (Figure 2) can thus be used to simulate the processing system and obtain probability distributions functions for waiting, inter-departure times and idle times.

The system and process hereinbefore described may be used to simulate any system which is driven by randomness. The process has the advantage that they can be used to simulate a wider class of stochastic models than existing analytical methods and are more accurate and faster at computing models than using Monte Carlo methods.

**Claims**

1. A computer system for simulating a physical system comprising:

   a first module (12) configured to convert a probability distribution function (7) of a physical property into a discrete function having at least one segment; and
   a second module (14) configured to perform an exact transformation of each segment.

2. A computer system according to claim 1, wherein the second module (14) is configured to add results of each transformation to provide a new probability distribution function.

3. A computer system according to claim 1 or 2, wherein the second module (14) is configured to perform a unary transformation of each segment.

4. A computer system according to claim 3, wherein the second module (14) is configured to perform a binary transformation of each segment with each segment of another discrete probability distribution function.

5. A computer system according to claim 4, wherein the binary transformation comprises convolution of each segment with each segment of another discrete probability distribution function.

6. A computer system according to claim 4 or 5, wherein the binary transformation comprises addition, subtraction, multiplication or division integral transformation of each segment with each segment of another discrete probability distribution function.

7. A computer system according to any preceding claim, wherein the probability distribution function is of an amount of a drug.

8. A computer system according to any preceding claim, wherein the probability distribution function is of a time interval in a processing system.

9. A method of simulating a physical system comprising:

   converting a probability distribution function (7) of a physical property into a discrete function having at least one segment; and
   performing an exact transformation of each segment.

10. A computer program comprising instructions for performing a method according to claim 9.

11. A computer program product comprising a computer-readable medium storing a computer program for causing a computer to convert a probability distribution function of a physical property into a discrete function having at least one segment and to perform an exact transformation of each segment.

Fig. 1

Fig. 2

Start

Supply PDF(s) 7 — S301

Supply rules 9 — S302

Discretise PDF(s) 7 — S303

Manipulate discrete
PDF(s) 13 using rules 9 — S304

Repartition result 15 — S305

Yes — Continue? — S306

No

Output result 15 — S307

End

Fig. 3

Fig. 4

**Fig. 5a**

**Fig. 5b**

Fig. 6

Fig. 7

Fig. 8

Fig. 9

**European Patent Office**

**EUROPEAN SEARCH REPORT**

Application Number

EP 05 11 1457

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KAPLAN S: "On the method of discrete probability distributions in risk and reliability calculations - Applications to seismic assessment" RISK ANALYSIS, vol. 1, no. 3, 1981, pages 189-196, XP008069972 * sections 1 to 3 and 8 * | 1-11 | INV. G06F17/18 |
| X | BERLEANT D: "Automatically verified reasoning with both intervals and probability density functions" INTERVAL COMPUTATIONS, no. 2, 1993, XP002403054 Retrieved from the Internet: URL:http://class.ee.iastate.edu/berleant/home/me/cv/papers/pdfs93.ps> [retrieved on 2006-10-11] * section 3, introduction * * section 3.1; figure 1 * | 1-11 | |
| X | COLOMBO A G ET AL: "A powerful numerical method to combine random variables" IEEE TRANSACTIONS OF RELIABILITY, vol. R-29, no. 2, June 1980 (1980-06), pages 126-129, XP008069981 * sections 1 to 3 * | 1-11 | TECHNICAL FIELDS SEARCHED (IPC) G06F |

-/--

The present search report has been drawn up for all claims

| Place of search | Date of completion of the search | Examiner |
|---|---|---|
| Berlin | 16 October 2006 | DOMINGO VECCHIONI, M |

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CARRERAS C ET AL: "Grid-based histogram arithmetic for the probabilistic analysis of functions" PROCEEDINGS OF THE 4TH INTERNATIONAL SYMPOSIUM ON ABSTRACTION, REFORMULATION, AND APPROXIMATION, LECTURE NOTES IN COMPUTER SCIENCE, vol. 1864, 2000, pages 107-123, XP002403055 Springer Verlag, London, UK ISBN: 3-540-67839-5 * abstract * * section 1, paragraphs 6 to 12 * * sections 3 to 5 *<br><br>----- | 1-11 | |

TECHNICAL FIELDS SEARCHED (IPC)

The present search report has been drawn up for all claims

| Place of search | Date of completion of the search | Examiner |
|---|---|---|
| Berlin | 16 October 2006 | DOMINGO VECCHIONI, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)